# EUROPÄISCHE PATENTSCHRIFT

(11) **EP 2 705 222 B1**
(45) Veröffentlichungstag und Bekanntmachung des Hinweises auf die Patenterteilung: **11.05.2016**
(21) Anmeldenummer: 11793667.4
(22) Anmeldetag: 06.12.2011
(51) Int. Cl.: F01D 17/14, F01D 17/18, F01D 9/02, F02C 6/12, F02B 37/02

(54) **TURBINE FÜR EINEN ABGASTURBOLADER**
TURBINE FOR AN EXHAUST-GAS TURBOCHARGER
TURBINE POUR UN TURBOCOMPRESSEUR À GAZ D'ÉCHAPPEMENT

(30) Priorität: 05.02.2011 DE 102011010454
(43) Veröffentlichungstag der Anmeldung: 12.03.2014
(73) Patentinhaber: Daimler AG, 70327 Stuttgart (DE)
(72) Erfinder: BRINKERT, Nils, 70376 Stuttgart (DE); SUMSER, Siegfried, 70327 Stuttgart (DE)
(74) Vertreter: JENSEN & SON
(86) Internationale Anmeldenummer: PCT/EP2011/006098
(87) Internationale Veröffentlichungsnummer: WO 2012/103908

(56) Entgegenhaltungen:
- DE-A1-102007 034 235
- DE-A1-102008 020 406
- DE-A1-102008 039 085
- US-A- 3 664 761

## Beschreibung

Die Erfindung betrifft eine Turbine für einen Abgasturbolader der im Oberbegriff des Patentanspruchs 1 angegebenen Art.

Aus dem Serienbau von Kraftwagen sind Abgasturbolader mit einer jeweiligen Turbine bekannt, wobei eine Beaufschlagung der Turbine zum Beispiel zweiflutig erfolgt. Weist die Verbrennungskraftmaschine beispielsweise eine Mehrzahl von Brennräumen, insbesondere Zylindern, auf, so kann dabei vorgesehen sein, dass ein Teil der Brennräume sein Abgas zu einer der Fluten und ein anderer Teil der Brennräume sein Abgas zu der anderen Fluten fördert.

Dabei kann vorgesehen sein, dass eine der Fluten segmentiert ist. Dies bedeutet, dass ein Turbinengehäuse der Turbine einen ersten sowie einen zweiten Spiralkanal aufweist, welche dieser Flut zugeordnet sind. Eine Durchsatzreduzierung dieser Flut gegenüber der anderen Flut ist beispielsweise derart dargestellt, dass einer der Spiralkanäle einen geringeren Umschlingungswinkel aufweist als der andere der Spiralkanäle.

Die DE 10 2008 039 085 A1 und die DE 10 2008 020 406 A1 offenbaren jeweils eine Turbine für einen Abgasturbolader, mit einem Turbinengehäuse, welches einen ersten Spiralkanal und einen zweiten Spiralkanal aufweist. Der zweite Spiralkanal ist über einen Umschlingungswinkelbereich von weniger als 360 Grad in Umfangsrichtung eines Turbinenrads der Turbine erstreckend ausgebildet. Der erste Spiralkanal weist einen gegenüber dem Umschlingungswinkelbereich des zweiten Spiralkanals größeren Umschlingungswinkelbereich auf, wobei der erste Spiralkanal und der zweite Spiralkanal in zumindest einem den Umschlingungswinkelbereichen gemeinsamen Winkelbereich in axialer Richtung des Turbinenrads nebeneinander angeordnet sind. Das zumindest bereichsweise in dem Turbinengehäuse aufgenommenes Turbinenrad ist durch die Spiralkanäle über eine in axialer Richtung von Wandungen des Turbinengehäuses begrenzte, sich in Umfangsrichtung des Turbinenrads erstreckende und eine Gesamtdüsenbreite aufweisende Düse von strömbarem Abgas anströmbar. Die Düse ist zumindest in dem Winkelbereich über eine jeweilige Teildüsenbreite der Spiralkanäle von Abgas versorgbar.

Die US 3,664,761 offenbart eine Turbine für einen Abgasturbolader, mit einem Turbinengehäuse, welches einen ersten Spiralkanal und einen zweiten Spiralkanal aufweist. Die beiden Spiralkanäle erstrecken sich über einen Umschlingungswinkelbereich von 360 Grad in Umfangsrichtung eines Turbinenrads. Der erste Spiralkanal und der zweite Spiralkanal sind in zumindest einem den Umschlingungswinkelbereichen gemeinsamen Winkelbereich in axialer Richtung des Turbinenrads nebeneinander angeordnet. Das zumindest bereichsweise in dem Turbinengehäuse aufgenommenes Turbinenrad ist durch die Spiralkanäle über eine in axialer Richtung von Wandungen des Turbinengehäuses begrenzte, sich in Umfangsrichtung des Turbinenrads erstreckende und eine Gesamtdüsenbreite aufweisende Düse von strömbarem Abgas anströmbar. Die Düse ist zumindest in dem Winkelbereich über eine jeweilige Teildüsenbreite der Spiralkanäle von Abgas versorgbar.

Es hat sich jedoch gezeigt, dass es dadurch zu einem erheblichen Wirkungsgradabfall insbesondere durch Ventilationsverluste kommt, was wiederum den Gesamtwirkungsgrad der Turbine deutlich verschlechtert.

Es ist daher Aufgabe der vorliegenden Erfindung, eine Turbine für einen Abgasturbolader bereitzustellen, welche einen verbesserten Wirkungsgrad aufweist.

Diese Aufgabe wird durch eine Turbine für einen Abgasturbolader mit den Merkmalen des Patentanspruchs 1 gelöst. Vorteilhafte Ausgestaltungen mit zweckmäßigen und nichttrivialen Weiterbildungen der Erfindung sind in den übrigen Ansprüchen angegeben.

Eine solche Turbine für einen Abgasturbolader umfasst ein Turbinengehäuse welches einen ersten Spiralkanal und einen zweiten Spiralkanal aufweist. Der zweite Spiralkanal ist über einen Umschlingungswinkelbereich von weniger als 360 Grad in Umfangsrichtung eines Turbinenrads der Turbine erstreckend ausgebildet. Der erste Spiralkanal weist einen gegenüber dem Umschlingungswinkelbereich des zweiten Spiralkanals größeren Umschlingungswinkelbereich auf, wobei der erste Spiralkanal und der zweite Spiralkanal in zumindest einem den Umschlingungswinkelbereichen gemeinsamen Winkelbereich in axialer Richtung des Turbinenrads nebeneinander angeordnet sind. Dies bedeutet, dass der Winkelbereich einen Teilbereich sowohl des ersten als auch des zweiten Umschlingungswinkelbereichs darstellt, in welchem sich die Spiralkanäle in axialer Richtung des Turbinenrads nebeneinander erstrecken, d. h. nebeneinander verlaufen.

Das zumindest bereichsweise in dem Turbinengehäuse aufgenommene Turbinenrad ist von durch die Spiralkanäle strömbaren Abgas über eine in axialer Richtung des Turbinenrads von Wandungen des Turbinengehäuses begrenzte, sich in Umfangsrichtung des Turbinenrads erstreckende und eine Gesamtdüsenbreite aufweisende Düse anströmbar.

Die Düse ist dabei zumindest in dem Winkelbereich über eine jeweilige Teildüsenbreite der Spiralkanäle von Abgas versorgbar. Mit anderen Worten kann in dem Winkelbereich Abgas von dem zweiten Spiralkanal über die Teildüsenbreite des zweiten Spiralkanals in die Düse einströmen. Ebenso kann in dem Winkelbereich Abgas von dem ersten Spiralkanal über die erste Teildüsenbreite in die Düse einströmen. Von dieser Düse kann dann über die Gesamtdüsenbreite das Abgas das Turbinenrad anströmen, wodurch das Turbinenrad mit dem Abgas beaufschlagt und von diesem angetrieben wird.

Erfindungsgemäß ist vorgesehen, dass die Teildüsenbreite des ersten Spiralkanals, welcher den größeren der Umschlingungswinkelbereiche aufweist, zumindest in einem von dem Winkelbereich unterschiedlichen, weiteren Winkelbereich des ersten Führungsbereichs breiter als die Teildüsenbreite des ersten Spiralkanals in dem ersten Winkelbereich ausgebildet ist.

Da der Umschlingungswinkelbereich des ersten Spiralkanals größer ist als der Umschlingungswinkelbereich des zweiten Spiralkanals ist der zumindest eine weitere Winkelbereich in Umfangsrichtung des Turbinenrads gegeben, in welchem sich lediglich der erste Spiralkanal in Umfangsrichtung des Turbinenrads erstreckt, jedoch nicht der zweite Spiralkanal. Mit anderen Worten sind die Spiralkanäle in dem zumindest einen weiteren Winkelbereich in axialer Richtung des Turbinenrads nicht bzw. nicht mehr nebeneinander angeordnet, da sich der zweite Spiralkanal im Gegensatz zum ersten Spiralkanal nicht in dem zumindest einen weiteren Winkelbereich erstreckt. Da der erste, sich in dem zumindest einen weiteren Winkelbereich erstreckende Spiralkanal eine breitere Teildüsenbreite aufweist als in dem ersten Winkelbereich ist der eingangs geschilderte Wirkungsgradabfall insbesondere in Folge von Ventilationsverlusten reduziert oder gar vermieden, was mit einem verbesserten Wirkungsgrad der erfindungsgemäßen Turbine einhergeht. Dadurch kann die erfindungsgemäße Turbine besonders effizient betrieben werden.

Ist der Turbine beispielsweise eine Verbrennungskraftmaschine zugeordnet, welche beispielsweise als Hubkolbenmaschine, insbesondere als Ottomotor, Dieselmotor, Diesottomotor ausgebildet ist, so ermöglicht dieser effizientere und verbesserte Betrieb der erfindungsgemäßen Turbine einen besonders effizienten und energieverbrauchsarmen Betrieb der Verbrennungskraftmaschine, sodass diese einen nur sehr geringen Kraftstoffverbrauch und geringe CO₂-Emissionen aufweist. Die erfindungsgemäße Turbine ist dabei sowohl für Verbrennungskraftmaschinen für Personenkraftwagen wie auch für Nutzkraftwagen oder bei anderweitigen Fahrzeugen oder bei anderweitigen Antriebsaggregaten einsetzbar. Die erfindungsgemäße Turbine kann beispielsweise auch bei einer Brennstoffzelle vorgesehen sein und von Abgas der Brennstoffzelle durchströmt und angetrieben werden.

Ferner ermöglicht die erfindungsgemäße Turbine die Darstellung eines vorteilhaften Aufstauverhaltens zur Darstellung besonders hoher Abgasrückführraten, da die Spiralkanäle eine Segmentierung einer Flut ermöglichen. Weist die Verbrennungskraftmaschine beispielsweise zwei Brennräume, insbesondere Zylinder, auf, in welchen Verbrennungsvorgänge ablaufen, woraus Abgas entsteht, so kann vorgesehen sein, dass einer der Brennräume sein Abgas zu einer Flut und der andere Brennraum zu einer weiteren Flut fördern. Einer dieser Fluten sind beispielsweise die Spiralkanäle des Turbinengehäuses der erfindungsgemäßen Turbine zugeordnet, während der anderen Flut beispielsweise lediglich ein Spiralkanal zugeordnet ist, welcher beispielsweise einen Strömungsquerschnitt aufweist, der zumindest im Wesentlichen gleich groß ist wie eine Summe aus einem Strömungsquerschnitt des ersten Spiralkanals und eines Strömungsquerschnitts des zweiten Spiralkanals.

Die Flut, welcher die beiden Spiralkanäle zugeordnet sind, ist durch die Spiralkanäle somit segmentiert und weist ein höheres Aufstauverhalten als die andere Flut auf. Dieses erhöhte Aufstauverhalten ist insbesondere durch den gegenüber dem Umschlingungswinkelbereich des ersten Spiralkanals geringeren Umschlingungswinkelbereich des zweiten Spiralkanals dargestellt, sodass mittels der erfindungsgemäßen Turbine besonders große Mengen von Abgas von einer Abgasseite der Verbrennungskraftmaschine zu einem Ansaugtrakt rückgeführt und in den Ansaugtrakt eingeleitet werden kann. Dadurch kann von der Verbrennungskraftmaschine angesaugte Luft mit Abgas beaufschlagt werden, was die Stickoxid- und Partikel-Emissionen der Verbrennungskraftmaschine gering hält.

Zur Darstellung der zumindest bereichsweisen fluidischen Trennung der Spiralkanäle des Turbinengehäuses der erfindungsgemäßen Turbine voneinander ist beispielsweise eine Zwischenwandung des Turbinengehäuses vorgesehen, welche in axialer Richtung des Turbinenrads zwischen den Spiralkanälen und in Umfangsrichtung des Turbinenrads verläuft.

Die Teildüsenbreite des ersten Spiralkanals verläuft dabei beispielsweise zumindest im Wesentlichen in axialer Richtung des Turbinenrads und ist einerseits begrenzt durch die auch den zweiten Spiralkanal begrenzende Zwischenwandung und einer den ersten Spiralkanal begrenzende ersten Wandung des Turbinengehäuses. Analog dazu ist die Teildüsenbreite des zweiten Spiralkanals einerseits begrenzt durch die auch den ersten Spiralkanal begrenzende Zwischenwandung und andererseits begrenzt durch eine den zweiten Spiralkanal begrenzende zweite Wandung des Turbinengehäuses.

Der Umschlingungswinkelbereich des ersten Spiralkanals beträgt beispielsweise zumindest im Wesentlichen mehr als 350°, insbesondere zumindest im Wesentlichen 360°, sodass der erste Spiralkanal als Vollspirale ausgebildet ist. Der Umschlingungswinkelbereich des zweiten Spiralkanals ist im Vergleich dazu wesentlich kleiner ausgebildet und beträgt beispielsweise zumindest im Wesentlichen 140°.

Der erste Spiralkanal kann dabei als so genannte λ-Flut fungieren, welche zur Einstellung eines gewünschten Luft-Kraftstoff-Verhältnisses und damit zur Darstellung gewünschter Leistungen und gewünschter Drehmomente der Verbrennungskraftmaschine dient. Der zweite Spiralkanal kann dabei als so genannte AGR-Flut (AGR - Abgasrückführung) ausgebildet sein, welche zur Darstellung des geschilderten vorteilhaften Aufstauverhaltens dient, um somit besonders hohe Längen von Abgas rückführen zu können.

Bei einer besonders vorteilhaften Ausführungsform der Erfindung ist die Teildüsenbreite des ersten Spiralkanals in dem weiteren Winkelbereich zumindest im Wesentlichen so groß wie die Gesamtdüsenbreite ausgebildet, sodass die Teildüsenbreite des ersten Spiralkanals in dem weiteren Winkelbereich zumindest im Wesentlichen der Gesamtdüsenbreite entspricht. Mit anderen Worten ist die Gesamtdüsenbreite durch die Teildüsenbreite des ersten Spiralkanals gebildet. Dies bedeutet, dass in dem weiteren Winkelbereich das Abgas, das in dem weiteren Winkelbereich lediglich aus dem ersten Spiralkanal aus- und das Turbinenrad anströmt (da sich in diesem weiteren Winkelbereich der erste Spiralkanal nicht mehr erstreckt), dass Abgas das Turbinenrad über die Gesamtdüsenbreite anströmt, über die das Abgas das Turbinenrad auch in dem ersten Winkelbereich anströmt, in welchem die Düse von beiden Spiralkanälen mit Abgas versorgt wird.

Dadurch ist der besonders geringe und gegenüber dem Umschlingungswinkelbereich des ersten Spiralkanals kleinere Umschlingungswinkelbereich des zweiten Spiralkanals kombiniert mit einer Gesamtturbinendüse an einem Radeintritt des Turbinenrads, sodass eine Verdeckung des Radeintritts in dem weiteren Winkelbereich zumindest im Wesentlichen nicht gegeben ist. Dies hält die Ventilationsverluste der erfindungsgemäßen Turbine besonders gering. Gleichzeitig ist sie besonders einfach und damit zeit- und kostengünstig fertigbar, insbesondere bezogen auf die Teildüsenbreite des ersten Spiralkanals bzw. einer entsprechenden Teildüse, welche durch die Teildüsenbreite gebildet ist.

Bei einer weiteren vorteilhaften Ausführungsform der Erfindung ist die Teildüsenbreite des ersten Spiralkanals in einem Übergangsbereich von einem ersten zu dem weiteren Winkelbereich sich verbreiternd ausgebildet. Ausgehend von dem ersten Winkelbereich in Umfangsrichtung des Turbinenrads verbreitert sich somit die Teildüsenbreite und damit die Teildüse des ersten Spiralkanals. Dadurch ist ein besonders strömungsgünstiger Übergang geschaffen, was Strömungsverluste gering hält. Dies trägt weiterhin zu einem effizienten Betrieb und zu einem hohen Wirkungsgrad der erfindungsgemäßen Turbine bei.

Ist die Teildüsenbreite des ersten Spiralkanals in dem Übergangsbereich sich zumindest im Wesentlichen auf die Gesamtdüsenbreite verbreiternd ausgebildet, so birgt dies den Vorteil dass dadurch eine besonders breite Teildüse des ersten Spiralkanals geschaffen ist, welche in dem weiteren Winkelbereich die Gesamtdüsenbreite und damit eine Gesamtdüse der Turbine darstellt, über welche das Turbinenrad von Abgas anströmbar ist. Dies hält die Ventilationsverluste besonders gering, was mit einem besonders hohen Wirkungsgrad der erfindungsgemäßen Turbine einhergeht.

Die erfindungsgemäße Turbine ist beispielsweise als Radialturbine ausgebildet, bei welcher das Turbinenrad zumindest im Wesentlichen in radialer Richtung desselbigen über die in Strömungsrichtung des Abgases durch das Turbinengehäuse stromauf des Turbinenrads angeordneten Teildüse bzw. die Gesamtdüse angeströmt wird.

Bei einer weiteren vorteilhaften Ausführungsform der Erfindung ist eine Massenzuführung von Abgas zu dem Turbinenrad über den ersten und/oder den zweiten, insbesondere über den ersten, Spiralkanal in Umfangsrichtung des Turbinenrads variabel ausgebildet. Mit anderen Worten ist eine in Umfangsrichtung des Turbinenrads über den Umfang betrachtete Massenzuführung von Abgas zum Turbinenrad nicht konstant. Somit wird einer in Umfangsrichtung des Turbinenrads über den Umfang betrachteten ungleichen Massenzuführung durch die Segmentierung entgegengewirkt, in dem die Massenzuführung zu dem Turbinenrad über den ersten Spiralkanal in den ersten Winkelbereich beispielsweise reduziert wird. Damit weist die erfindungsgemäße Turbine einen besonders effizienten Betrieb und einen hohen Wirkungsgrad auf. Diese ungleiche Massenzuführung wird beispielsweise dadurch realisiert, dass ein dem zweiten Spiralkanal zugeordneter Quotient A/R in Umfangsrichtung des Turbinenrads variabel ausgebildet ist, wobei A eine Spiralen- bzw. Schwerpunktsfläche des zweiten Spiralkanals bezeichnet, über welche das Turbinenrad mit Abgas beaufschlagbar ist, und wobei R einen Schwerpunkt des zweiten Spiralkanals bezeichnet.

Zusätzlich oder alternativ kann vorgesehen sein, dass ein dem ersten Spiralkanal zugeordneter Quotient A/R in Umfangsrichtung variabel ausgebildet ist, wobei A eine Spiralen- bzw. Schwerpunktsfläche des ersten Spiralkanals bezeichnet, über welche das Turbinenrad mit Abgas beaufschlagt ist, und wobei R einen Schwerpunktsradius des ersten Spiralkanals bezeichnet. Mit einer Reduzierung des Quotienten A/R des zweiten Spiralkanals insbesondere nahe dem Minimum von 0 kann die Massenzuführung des ersten Spiralkanals zum Turbinenrad angehoben werden. Dies bewirkt eine gleichmäßigere Massenzuführung zum Turbinenrad bei Betrachtung einer Gesamtmasse des Abgases, was zu einem besonders homogenen Strömungsfeld und einem besonders hohen Wirkungsgrad führt, bei gleichzeitiger Beibehaltung einer einfachen, zeit- und kostengünstigen Fertigung der erfindungsgemäßen Turbine. Ein mögliches Ziel einer entsprechenden Auslegung könnte somit eine gleichbleibende Einströmung der Gesamtmasse von Abgas in Umfangsrichtung des Turbinenrads über dessen Umfang sein, was dennoch nicht zwingend notwendig ist.

Die erfindungsgemäße Turbine weist somit eine besonders einfache, zeit- und kostengünstige Fertigung auf, was mit einer besonders geringen Streuung insbesondere in Bezug auf Strömungseigenschaften der Turbine bei einer Serienfertigung führt. Der verbesserte Wirkungsgrad der Turbine führt zu einer Wirkungsgradsteigerung der zugehörigen Verbrennungskraftmaschine, was mit einem geringen Kraftstoffverbrauch sowie mit geringen CO₂-Emissionen der Verbrennungskraftmaschine einhergeht.

Bei einer weiteren vorteilhaften Ausführungsform der Erfindung weist der zweite Spiralkanal einen kleineren Strömungsquerschnitt als der erste Spiralkanal auf. Damit weist der zweite Spiralkanal eine besonders gute Aufstauwirkung auf, sodass besonders große Mengen von Abgas abgeführt werden können, um die Stickoxid- und Partikel-Emissionen der Verbrennungskraftmaschine gering zu halten.

Sind die Spiralkanäle, insbesondere bezogen auf einen jeweiligen Strömungsquerschnitt, asymmetrisch zueinander ausgebildet, so birgt dies den Vorteil, dass das Aufstauverhalten der Turbine besonders bedarfsgerecht eingestellt werden kann, zur Realisierung hoher Abgasrückführraten.

Weitere Vorteile, Merkmale und Einzelheiten der Erfindung ergeben sich aus der nachfolgenden Beschreibung bevorzugter Ausführungsbeispiele sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Dabei zeigen:
- Fig. 1a-d: jeweils eine schematische Schnittansicht einer Turbine eines Abgasturboladers mit einem Turbinengehäuse, welches zwei Spiralkanäle aufweist, die sich in voneinander unterschiedlichen Umschlingungswinkelbereichen erstrecken,
- Fig. 2: ausschnittsweise eine schematische Längsschnittansicht der Turbine gemäß Fig. 1b entlang einer Schnittlinie A-A in Fig. 2c,
- Fig. 3: ausschnittsweise eine schematische Längsschnittansicht der Turbine gemäß Fig. 1c entlang einer Schnittlinie B-B in Fig. 2c,
- Fig. 4: eine schematische Querschnittansicht der Turbine gemäß Fig. 1c,
- Fig. 5: jeweils ausschnittsweise vier schematische Längsschnittansichten der Turbine gemäß Fig. 4 entlang entsprechender Schnittlinie,
- Fig. 6: ausschnittsweise eine schematische und abgewickelte Ansicht einer Düse der Turbine gemäß den Figuren 4 und 5 und
- Fig. 7: zwei Verläufe eines Quotienten aus einem Spiralenquerschnitt und einem Spiralenschwerpunktradius über einen Umschlingungswinkelbereich von Spiralkanälen der Turbine gemäß den Fig. 4 und 5.

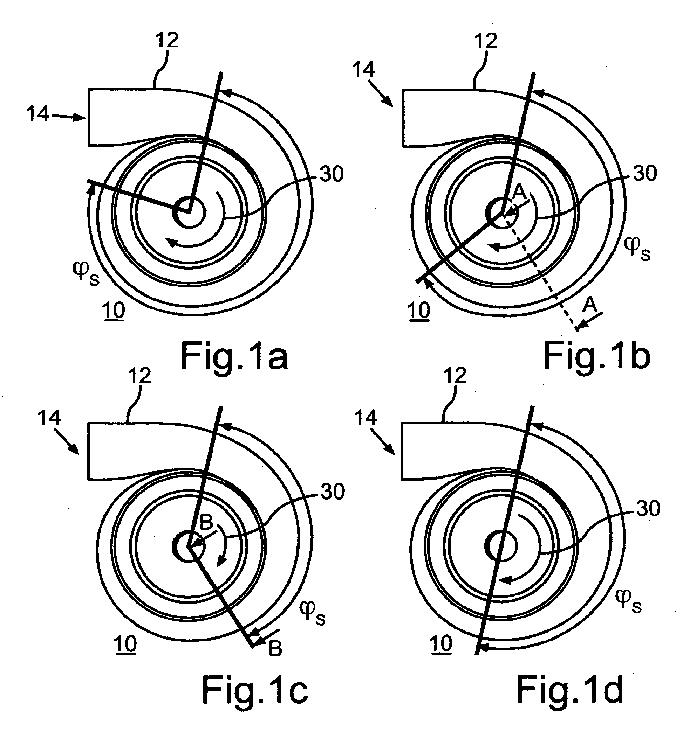

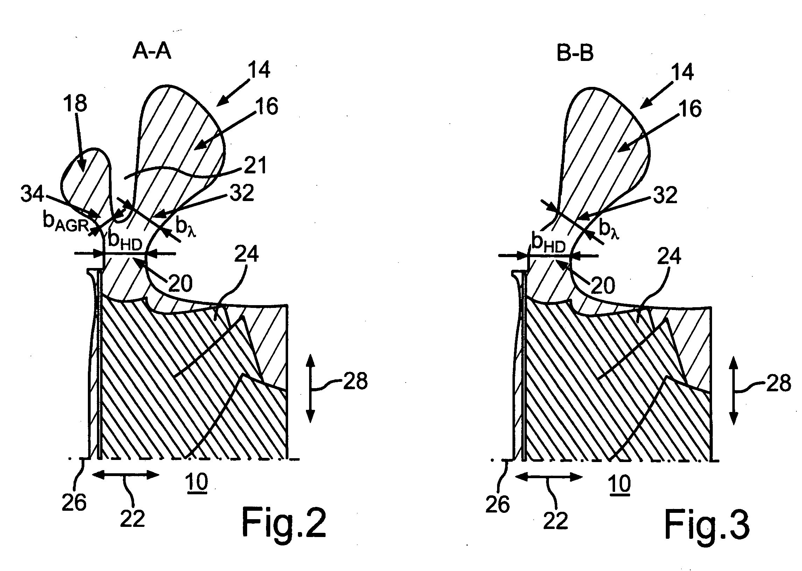

Die Figuren 1a-1d zeigen jeweils eine Turbine 10 für einen Abgasturbolader einer Verbrennungskraftmaschine, welche ein Turbinengehäuse 12 und wenigstens eine Flut 14 umfasst. Wie insbesondere der Fig. 2 zu entnehmen ist, welche die Turbine 10 gemäß Fig. 1b entlang der Schnittlinie A-A zeigt, ist die Flut 14 segmentiert und in einen ersten Spiralkanal 16 und einen zweiten Spiralkanal 18 mittels einer Zwischenwandung 21 des Turbinengehäuses 12 unterteilt. Die Zwischenwandung 21 trennt dabei den ersten Spiralkanal 16 und den zweiten Spiralkanal 18 zumindest bereichsweise fluidisch und insbesondere in axialer Richtung, welche durch einen Richtungspfeil 22 angedeutet, der Turbine 10.

In dem Turbinengehäuse 12 ist ein Turbinenrad 24 um eine Drehachse 26 drehbar aufgenommen, welches mit der Flut 14 durchströmenden Abgas beaufschlagbar und dadurch antreibbar ist. Dazu durchströmt das Abgas die Flut 14 und damit die Spiralkanäle 16, 18. Aus dem ersten Spiralkanal 16 und dem zweiten Spiralkanal 18 strömt das Abgas in eine Gesamtdüse 20, welche eine Gesamtdüsenbreite von b_{HD}, aufweist. Die Gesamtdüse 20 wird dabei auch als Hauptdüse bezeichnet. Von der Gesamtdüse 20 strömt das Abgas im Relativsystem bei optimaler Zuströmung zumindest im Wesentlichen in radialer Richtung (Richtungspfeil 28) das Turbinenrad 20 an und treibt dieses dadurch an.

Der erste Spiralkanal 16 ist beispielsweise als Vollspirale ausgebildet und erstreckt sich in Umfangsrichtung (Richtungspfeil 30) des Turbinenrads 24 über dessen Umfang über einen Umschlingungswinkelbereich ϕ_{GS} von beispielsweise größer als 350°.

Der zweite Spiralkanal 18 ist als Teilspirale ausgebildet und erstreckt sich beispielsweise in einem Umschlingungswinkelbereich ϕ_{S} von 280° gemäß Fig. 1a, von 220° gemäß Fig. 1b, von 140° gemäß Fig. 1c oder von 180° gemäß Fig. 1d. Dies bedeutet, dass der Umschlingungswinkelbereich ϕ_{S} des zweiten Spiralkanals 18 geringer ist als der Umschlingungswinkelbereich ϕ_{GS} des ersten Spiralkanals 16. Daraus ergibt sich, dass der ersten Spiralkanal 16 und der zweite Spiralkanal 18 bezogen auf die axiale Richtung (Richtungspfeil 22) des Turbinenrads 24 in wenigstens einem Winkelbereich nebeneinander angeordnet sind. Mit anderen Worten erstreckt sich in diesem ersten Winkelbereich sowohl der erste Spiralkanal 16 als auch der zweite Spiralkanal 18 bezogen auf die axiale Richtung des Turbinenrads 24. Ferner existiert daher wenigstens ein weiterer Winkelbereich des Umschlingungswinkelbereichs des ersten Spiralkanals 16, in welchem sich lediglich der erste Spiralkanal 16 jedoch nicht bzw. nicht mehr der zweite Spiralkanal 18 erstreckt. Bezogen auf die axiale Richtung des Turbinenrads 24 erstreckt sich in dem weiteren Turbinenbereich somit nur noch der den größeren Umschlingungswinkelbereich ϕ_{GS} aufweisende erste Spiralkanal 16.

Durch diese unterschiedlichen Umschließungswinkelbereiche ist ein vorteilhaftes Aufstauverhalten der Flut 14 dargestellt, so dass mittels der Flut 14 besonders hohe Abgasrückführraten darstellbar sind.

Der erste Spiralkanal 16 wird dabei als so genannter λ-Kanal genutzt und dient dem Zweck, ein gewünschtes Kraft- Luft-Verhältnis der Verbrennungskraftmaschine einzustellen zur Darstellung erwünschter Leistungen und Drehmomente. Der zweite Spiralkanal 18 wird als so genannter AGR-Kanal bezeichnet und dient dem Zweck, eine hohe Aufstauwirkung bereitzustellen, besonders hohe Menge von Abgas von einem Abgastrakt zu einem Ansaugtrakt der Verbrennungskraftmaschine rückzuführen und in den Ansaugtrakt einzuleiten. So kann von der Verbrennungskraftmaschine angesaugte Luft mit Abgas beaufschlagt werden, wodurch sich Stickoxid- und Partikel- Emissionen gering halten lassen.

In dem ersten Winkelbereich weist der erste Spiralkanal 16 eine erste Teildüse 32 mit einer Teildüsenbreite b_{λ} auf, während der zweite Spiralkanal 18 eine zweite Teildüse 34 mit einer Teildüsenbreite b_{AGR} aufweist. Von diesen Teildüsen 32, 34 strömt das die Spiralkanäle 16, 18 jeweils durchströmende Abgas in die Gesamtdüse 20 ein, von welcher wiederum das Abgas das Turbinenrad 24 anströmt und dieses antreibt.

Der Fig. 2 zu entnehmen ist eine Einströmgeometrie von Abgas zu dem Turbinenrad 20, wenn der erste Spiralkanal 16 und der zweite Spiralkanal 18, welche für sich auch als Fluten bezeichnet werden können, einen Quotienten A/R von größer als 0 aufweisen. In dem Quotienten A/R bezeichnet A dabei eine Spiralenfläche des ersten Spiralkanals 16 bzw. des zweiten Spiralkanals 18, wobei R einen entsprechenden Spiralenschwerpunktradius des ersten Spiralkanals 16 bzw. des zweiten Spiralkanals 18 bezeichnet. Der Quotient A/R ist dabei ein Maß für den Drall der Strömung des Abgases. Betrachtet man beispielsweise eine bestimmte Spiralenquerschnittsfläche A, so hängt es davon ab, an welchem korrespondierenden Spiralenschwerpunktradius R sich diese Spiralenquerschnittsfläche A befindet. Ist der Quotient A/R klein, so resultieren daraus hohe Dralleffekte und umgekehrt.

Die Fig. 3 zeigt die Turbine 10 gemäß Fig. 1c entlang der entsprechenden Schnittlinie B-B. Der Fig. 3 zu entnehmen ist eine Einströmgeometrie, wenn einer der beiden Spiralkanäle 16, 18, in diesem Falle der zweite Spiralkanal 18 einen Quotienten von A/R von zumindest im Wesentlichen 0 aufweist, während der andere der Spiralkanäle, in diesem Fall der erste Spiralkanal 16, weiterhin einen Quotienten A/R von zumindest im Wesentlichen größer als 0 aufweist.

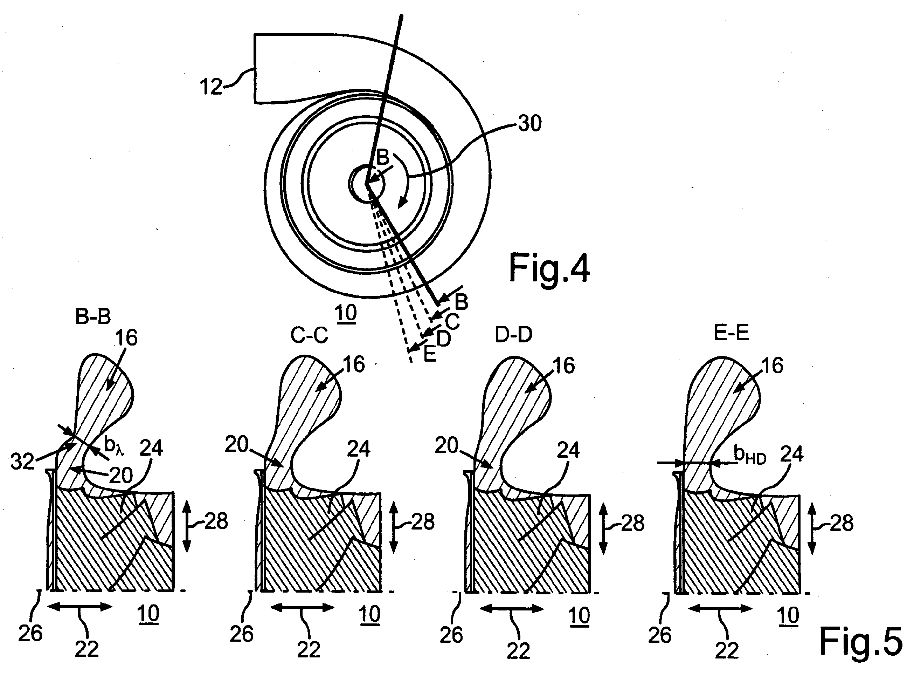

Die Fig. 4 zeigt die Turbine 10 gemäß 1c mit Schnittlinien B-B, C-C, D-D und E-E. Die Fig. 5 zeigt die dazu korrespondierenden Schnittdarstellungen. Anhand der Schnittdarstellungen der Fig. 5 ist ein Übergangsbereich der Turbine 10 dargestellt, welcher in Umfangsrichtung (Richtungspfeil 30) des Turbinenrads 24 über dessen Umfang in einem Winkelbereich verläuft. In diesem Übergangsbereich ist die erste Teildüse 32 ausgehend von ihrer Teildüsenbreite b_{λ} sich sukzessive verbreiternd ausgebildet, bis sie schließlich zumindest im Wesentlichen einer Breite b_{HD} der als Hauptdüse zu bezeichnenden Gesamtdüse 20 entspricht. In weiterer Umfangsrichtung in dem Umschlingungswinkelbereich ϕ_{GS} des ersten Spiralkanals 16 behält die erste Teildüse 32, welche nun die Gesamtdüse 20 darstellt, ihre Gesamtdüsenbreite b_{HD} bei. So weist die Turbine 10 besonders geringe Ventilationsverluste auf, was mit einem besonders hohen Wirkungsgrad der Turbine 10 einhergeht. Dies ermöglicht einen besonders effizienten und kraftstoffverbrauchsarmen Betrieb der Verbrennungskraftmaschine mit geringen CO₂-Emissionen. Ferner ist die Turbine 10 besonders zeit- und kostengünstig herstellbar.

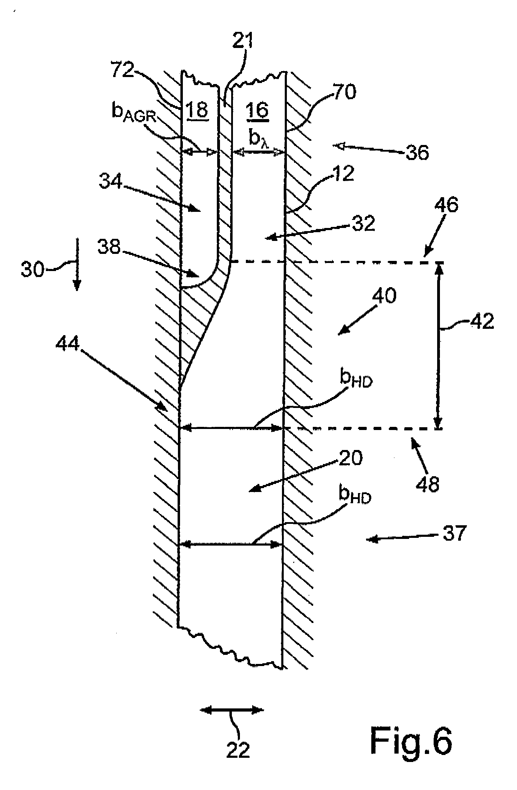

Diese Verbreiterung der ersten Teildüse 32 des ersten Spiralkanals 16 ist insbesondere anhand der Fig. 6 erkennbar. In der Fig. 6 ist der zuvor geschilderte erste Winkelbereich mit 36 bezeichnet. In dem Winkelbereich 36 sind der erste Spiralkanal 16 und der zweite Spiralkanal 18 in axialer Richtung (Richtungspfeil 22) des Turbinenrads 24 nebeneinander angeordnet. In Umfangsrichtung (Richtungspfeil 30) des Turbinenrads 24 ausgehend von dem Winkelbereich 36 weiter betrachtend endet der zweite Spiralkanal 18 in einem Bereich 38, da er den geringeren Umschlingungswinkelbereich ϕ_{S} aufweist, als der erste Spiralkanal 16, wobei der erste Spiralkanal 16 und der zweite Spiralkanal 18 ausgehend von einem Turbineneintritt der Turbine 10 beispielsweise auf gemeinsamen Höhe beginnen. Deswegen erstreckt sich der erste Spiralkanal 16 in dem sich in Umfangsrichtung an den ersten Winkelbereich 36 anschließenden weiteren Winkelbereich, welcher in der Fig. 6 mit 37 bezeichnet wird. In dem geschilderten Übergangsbereich, welcher in der Fig. 6 mit 42 bezeichnet wird, ist die Teildüsenbreite b_{λ} der ersten Teildüse 32 des ersten Spiralkanals 16 sich in Umfangsrichtung des Turbinenrads 24 zumindest im Wesentlichen kontinuierlich verbreiternd ausgebildet, sodass sie an einer Stelle 44 des Umschlingungswinkelbereichs des ersten Spiralkanals 16 zumindest im Wesentlichen der Gesamtdüsenbreite b_{HD} der als Hauptdüse zu bezeichnenden Gesamtdüse 20 entspricht.

Mit anderen Worten ist dann die Gesamtdüse 20 durch die erste Teildüse 32 gebildet bzw. umgekehrt. Da die zweite Teildüse 34 des zweiten Spiralkanals 18 in dem Bereich 38 auf 0 ausläuft, was bedeutet, dass ihr Strömungsquerschnitt auf 0 reduziert wird, wird in Umfangsrichtung daran anschließend das Turbinenrad 24 lediglich von dem ersten Spiralkanal 16 über dessen erste Teildüse 32, welcher der Gesamtdüse 20 entspricht, mit Abgas versorgt. Eine Stelle 46 stellt beispielsweise den Beginn des Übergangsbereichs 42 dar, wobei die Schnittdarstellung B-B in der Fig. 5 der Stelle 46 entspricht. Eine Stelle 48 stellt beispielsweise ein Ende des Übergangsbereichs 42 dar, welche der Schnittdarstellung E-E in der Fig. 5 entspricht. In Umfangsrichtung an die Stelle 48 anschließend behält die erste Teildüse 32 ihre Teildüsenbreite b_{λ}, welche der Gesamtdüsenbreite b_{HD} entspricht, bei.

Wie der Fig. 6 zu entnehmen ist, ist im Winkelbereich 36 die erste Teildüse 32 einerseits von der Zwischenwandung 20 und andererseits von einer ersten Wandung 70 des Turbinengehäuses 12 begrenzt. Analog dazu ist die zweite Teildüse 34 in axialer Richtung (Richtungspfeil 22) des Turbinenrads 24 einerseits von der Zwischenwandung 20 und andererseits von einer zweiten Wandung 72 des Turbinengehäuses 12 begrenzt.

Die Gesamtdüse 20 ist in dem Winkelbereich 40 in axialer Richtung einerseits von der ersten Wandung 70 und andererseits von der zweiten Wandung 72 begrenzt.

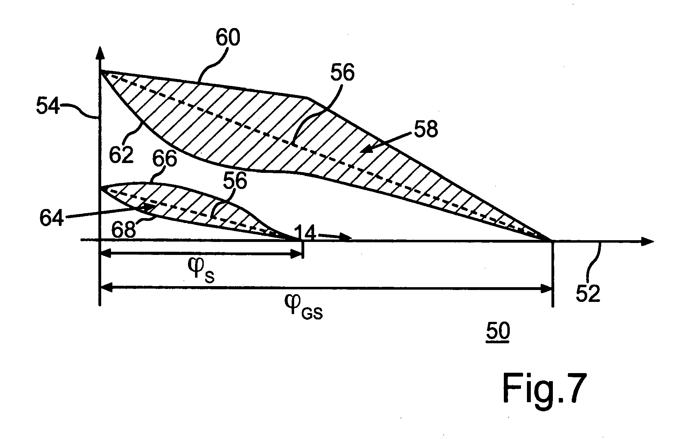

Die Fig. 7 zeigt ein Diagramm 50, auf dessen Abszisse 52 der Umschlingungswinkelbereich des ersten Spiralkanals 16 aufgetragen ist, welcher mit ϕ_{GS} bezeichnet ist. Dabei beträgt der Umschlingungswinkelbereich ϕ_{GS} zumindest im Wesentlichen 360°. Auf der Abszisse 52 ebenfalls aufgetragen ist der Umschlingungswinkelbereich ϕ_{S} des zweiten Spiralkanals 18, welcher zumindest im Wesentlichen 140° beträgt. Das Diagramm 52 umfasst eine Ordinate 54 aus welcher der Quotient A/R aufgetragen ist.

Wie der Fig. 7 zu entnehmen ist, ermöglicht die Turbine 10 gemäß den vorhergehenden Figuren insbesondere in Folge der sich verbreiternd ausgebildeten ersten Teildüse 32 des ersten Spiralkanals 16 die Darstellung eines Verlaufs des Quotienten A/R des ersten Spiralkanals 16 und/oder des zweiten Spiralkanals 18, welcher im Gegensatz zu mit Strichlinien 56 dargestellten linearen Verläufen nicht linear sein muss und vorteilhafterweise nicht linear ist. Bei der Turbine 10 ist es dabei möglich, einen Verlauf des Quotienten A/R des ersten Spiralkanals 16 darzustellen, welcher in einem strichlierten Bereich 56 des Diagramms 50 liegt, welcher durch Hülllinien 60 und 62 eingehüllt ist.

Bezogen auf den zweiten Spiralkanal 18 ist es möglich, einen Verlauf des Quotienten A/R des zweiten Spiralkanals 18 darzustellen, welcher in einem Bereich 64 liegt, der durch Hülllinien 66 und 68 eingehüllt ist. Dadurch weist die Turbine 10 einen besonders guten Wirkungsgrad mit besonders geringen Wirkungsgradverlusten auf. Durch diese nichtlineare Einstellung und Variation des Quotienten A/R kann eine über den Umfang des Turbinenrads 24 betrachtete, nicht konstante Massenzuführung von Abgas des Turbinenrads 24 von dem ersten Spiralkanal 16 und dem zweiten Spiralkanal 18 dargestellt werden. Somit kann der ungleichen Massenzuführung durch die Segmentierung der Flut 14 entgegengewirkt werden, was zu einem besonders hohen Wirkungsgrad der Turbine 10 beiträgt.

## Patentansprüche

1. Turbine (10) für einen Abgasturbolader, mit einem Turbinengehäuse (12), welches einen ersten Spiralkanal (16) und einen zweiten Spiralkanal (18) aufweist, wobei der zweite Spiralkanal (18) sich über einen Umschlingungswinkelbereich (ϕ_{S}) von weniger als 360 Grad in Umfangsrichtung (30) eines Turbinenrads (24) der Turbine (10) erstreckend ausgebildet ist, und der erste Spiralkanal (16) einen gegenüber dem Umschlingungswinkelbereich (ϕ_{S}) des zweite Spiralkanals (18) größeren Umschlingungswinkelbereich (ϕ_{GS}) aufweist, wobei der erste Spiralkanal (16) und der zweite Spiralkanal (18) in zumindest einem den Umschlingungswinkelbereichen (ϕ_{S}, ϕ_{GS}) gemeinsamen Winkelbereich (36) in axialer Richtung (22) des Turbinenrads (24) nebeneinander angeordnet sind, und wobei das zumindest bereichsweise in dem Turbinengehäuse (12) aufgenommenes Turbinenrad (24) von durch die Spiralkanäle (16, 18) strömbarem Abgas über eine in axialer Richtung (22) von Wandungen (70, 72) des Turbinengehäuses (12) begrenzte, sich in Umfangsrichtung (30) des Turbinenrads (32) erstreckende und eine Gesamtdüsenbreite (b_{HD}) aufweisende Düse (20) anströmbar ist, die zumindest in dem Winkelbereich (36) über eine jeweilige Teildüsenbreite (b_{λ}, b_{AGR}) der Spiralkanäle (16, 18) von Abgas versorgbar ist,
**dadurch gekennzeichnet, dass**
die Teildüsenbreite (b_{λ} des ersten Spiralkanals (16) zumindest in einem von dem Winkelbereich (36) unterschiedlichen, weiteren Winkelbereich (40, 42) des Umschlingungswinkelbereichs (ϕ_{GS}) breiter als die Teildüsenbreite (b_{λ}) des ersten Spiralkanals (16) in dem ersten Winkelbereich (36) ausgebildet ist.

2. Turbine (10) nach Anspruch 1,
**dadurch gekennzeichnet, dass**
die Teildüsenbreite (b_{λ}) des ersten Spiralkanals (16) in dem weiteren Winkelbereich (40, 42) zumindest im Wesentlichen der Gesamtdüsenbreite (b_{HD}) entspricht.

3. Turbine (10) nach einem der Ansprüche 1 oder 2,
**dadurch gekennzeichnet, dass**
die Teildüsenbreite (b_{λ}) des ersten Spiralkanals (16) in einem Übergangsbereich (42) zwischen dem ersten zu dem weiteren Winkelbereich (36, 40) sich verbreiternd ausgebildet ist.

4. Turbine (10) nach Anspruch 3,
**dadurch gekennzeichnet, dass**
die Teildüsenbreite (b_{λ}) des ersten Spiralkanals (16) in dem Übergangsbereich (42) sich zumindest im Wesentlichen auf die Gesamtdüsenbreite (b_{HD}) verbreiternd ausgebildet ist.

5. Turbine (10) nach einem der vorhergehenden Ansprüche,
**dadurch gekennzeichnet, dass**
eine Massenzuführung von Abgas zu dem Turbinenrad (24) über den ersten und/oder den zweiten Spiralkanal (16, 18) in Umfangsrichtung (30) des Turbinenrads (24) variabel ausgebildet ist.

6. Turbine (10) nach einem der vorhergehenden Ansprüche,
**dadurch gekennzeichnet, dass**
ein dem zweiten Spiralkanal (18) zugeordneter Quotient A/R in Umfangsrichtung (30) des Turbinenrads (24) variabel ausgebildet ist, wobei A eine Spiralenfläche des zweiten Spiralkanals (18) bezeichnet, über welche das Turbinenrad (24) mit Abgas beaufschlagbar ist, und wobei R einen Schwerpunktsradius des zweiten Spiralkanals (18) bezeichnet.

7. Turbine (10) nach einem der vorhergehenden Ansprüche,
**dadurch gekennzeichnet, dass**
ein dem ersten Spiralkanal (16) zugeordneter Quotient A/R in Umfangsrichtung (30) des Turbinenrads (24) variabel ausgebildet ist, wobei A eine Spiralenfläche des ersten Spiralkanals (16) bezeichnet, über welche das Turbinenrad (24) mit Abgas beaufschlagbar ist, und wobei R einen Schwerpunktsradius des ersten Spiralkanals (16) bezeichnet.

8. Turbine (10) nach einem der vorhergehenden Ansprüche,
**dadurch gekennzeichnet, dass**
der zweite Spiralkanal (18) einen kleineren Strömungsquerschnitt aufweist als der erste Spiralkanal (16).

9. Turbine (10) nach einem der vorhergehenden Ansprüche,
**dadurch gekennzeichnet, dass**
- die Spiralkanäle (16, 18), insbesondere bezogen auf einen jeweiligen Strömungsquerschnitt, asymmetrisch zueinander ausgebildet sind.

## Claims

1. Turbine (10) for a turbocharger, comprising a turbine housing (12) having a first spiral duct (16) and a second spiral duct (18), wherein the second spiral duct (18) is designed to extend over a wrap angle range (ϕ_{S}) of less than 360 degrees in the circumferential direction (30) of a turbine wheel (24) of the turbine (10) and the first spiral duct (16) has a wrap angle range (ϕ_{GS}) greater than the wrap angle range (ϕ_{S}), wherein the first spiral duct (16) and the second spiral duct (18) are arranged adjacent to one another in the axial direction (22) of the turbine wheel (24) in at least one angle range (36) common to the wrap angle ranges (ϕ_{S}, (ϕ_{GS}), and wherein the turbine wheel (24), which is at least partially accommodated in the turbine housing (12), can be approached by exhaust gas capable of flowing through the spiral ducts (16, 18) via a nozzle (20), which is bounded in the axial direction (22) by walls (70, 72) of the turbine housing (12), extends in the circumferential direction (30) of the turbine wheel (24) and has an overall nozzle width (b_{HD}), and which can be supplied with exhaust gas at least in the angle range (36) via a respective partial nozzle width (b_{λ}, b_{AGR}) of the spiral ducts (16, 18),
**characterised in that**
the partial nozzle width (b_{λ}) of the first spiral duct (16) is, at least in a further angle range (40, 42) of the wrap angle range (ϕ_{GS}) which is different from the angle range (36), greater than the partial nozzle width (b_{λ}) of the first spiral duct (16) in the first angle range (36).

2. Turbine (10) according to claim 1,
**characterised in that**
the partial nozzle width (b_{λ}) of the first spiral duct (16) corresponds at least substantially to the overall nozzle width (b_{HD}) in the further angle range (40, 42).

3. Turbine (10) according to claim 1 or 2,
**characterised in that**
the partial nozzle width (b_{λ}) of the first spiral duct (16) is designed to increase in a transitional region (42) from the first to the further angle range (36, 40).

4. Turbine (10) according to claim 3,
**characterised in that**
the partial nozzle width (b_{λ}) of the first spiral duct (16) is designed to increase in the transitional region (42) at least substantially to the overall nozzle width (b_{HD}).

5. Turbine (10) according to any of the preceding claims,
**characterised in that**
a mass feed of exhaust gas to the turbine wheel (24) via the first and/or the second spiral duct (16, 18) is designed to be variable in the circumferential direction (30) of the turbine wheel (24).

6. Turbine (10) according to any of the preceding claims,
**characterised in that**
an A/R quotient assigned to the second spiral duct (18) is designed to be variable in the circumferential direction (30) of the turbine wheel (24), A denoting a spiral area of the second spiral duct (18) via which exhaust gas can be applied to the turbine wheel (24) and R denoting a centre of gravity radius of the second spiral duct (18).

7. Turbine (10) according to any of the preceding claims,
**characterised in that**
an A/R quotient assigned to the first spiral duct (16) is designed to be variable in the circumferential direction (30) of the turbine wheel (24), A denoting a spiral area of the first spiral duct (16) via which exhaust gas can be applied to the turbine wheel (24) and R denoting a centre of gravity radius of the first spiral duct (16).

8. Turbine (10) according to any of the preceding claims,
**characterised in that**
the second spiral duct (18) has a smaller flow cross-section than the first spiral duct (16).

9. Turbine (10) according to any of the preceding claims,
**characterised in that**
the spiral ducts (16, 18) are designed to be asymmetric relative to one another, in particular in terms of their respective flow cross-sections.

## Revendications

1. Turbine (10) pour un turbocompresseur à gaz d'échappement, comprenant un carter (12) de turbine qui présente un premier canal en spirale (16) et un second canal en spirale (18), le second canal en spirale (18) s'étendant sur une zone d'angle d'enroulement (ϕ_{S}) d'au moins inférieur à 360 degrés dans la direction circonférentielle (30) d'une roue (24) de la turbine (10), et le premier canal en spirale (16) présentant une zone d'angle d'enroulement (ϕ_{GS}) supérieure à la zone d'angle d'enroulement (ϕ_{S}) du second canal en spirale (18), le premier canal en spirale (16) et le second canal en spirale (18) étant adjacents l'un à l'autre dans au moins une zone angulaire (36) commune aux zones d'angle d'enroulement (ϕ_{GS}, ϕ_{S}) dans la direction axiale de la roue (24) de turbine, et dans la roue (24) de turbine logée au moins partiellement dans le carter (12) de turbine peut s'écouler du gaz d'échappement pouvant s'écouler par les canaux en spirale (16, 18) au moyen d'un injecteur (20), limité dans la direction axiale (22) par des parois (70, 72) du carter (12) de turbine, présentant une largeur totale d'injecteur (b_{HD}) et s'étendant dans la direction circonférentielle (30) de la roue (32) de turbine ; ledit injecteur pouvant être alimenté en gaz d'échappement au moins dans la zone (36) d'angle sur une largeur partielle d'injecteur (bλ, b_{AGR}) respective des canaux en spirale (16, 18), **caractérisé en ce que** la largeur partielle d'injecteur (bλ) du premier canal en spirale (16) est au moins dans une autre zone d'angle (40, 42) de la zone d'angle d'enroulement (ϕ_{GS}) différente de la zone d'angle (36) supérieure à la largeur partielle d'injecteur (bλ) du premier canal en spirale (16) dans la première zone d'angle (36).

2. Turbine (10) selon la revendication 1, **caractérisé en ce que** la largeur partielle d'injecteur (bλ) du premier canal en spirale (16) correspond dans l'autre zone d'angle (40, 42) au moins essentiellement à la largeur totale (b_{HD}) d'injecteur.

3. Turbine (10) selon la revendication 1 ou la revendication 2, **caractérisée en ce que** la largeur partielle d'injecteur (bλ) du premier canal en spirale (16) s'élargit dans une zone de transition (42) entre la première et l'autre zone d'angle (36, 42).

4. Turbine (10) selon la revendication 3, **caractérisée en ce que** la largeur partielle d'injecteur (bλ) du premier canal en spirale (16) dans la zone de transition (42) s'élargit au moins essentiellement sur la largeur totale (b_{HD}) d'injecteur.

5. Turbine (10) selon l'une quelconque des revendications précédentes, **caractérisée en ce qu'**une introduction massique de gaz d'échappement dans la roue (24) de turbine s'effectue sélectivement par le premier et/ou le second canal en spirale (16, 18) dans la direction circonférentielle (30) de la roue (24) de turbine.

6. Turbine (10) selon l'une quelconque des revendications précédentes, **caractérisée en ce qu'**un rapport A/R associé au second canal en spirale (18) est variable dans la direction circonférentielle (30) de la roue (24) de turbine, A représentant une surface en spirale du second canal en spirale (18), laquelle peut alimenter en gaz d'échappement la roue (24) de turbine, et R représentant un rayon du centre de gravité du second canal en spiral (18).

7. Turbine (10) selon l'une quelconque des revendications précédentes, **caractérisée en ce qu'**un rapport A/R associé au premier canal en spirale (16) est variable dans la direction circonférentielle (30) de la roue (24) de turbine, A représentant une surface en spirale du premier canal en spirale (16), laquelle pouvant alimenter en gaz d'échappement la roue (24) de turbine, et R représentant un rayon de centre de gravité du premier canal en spirale (16).

8. Turbine (10) selon l'une quelconque des revendications précédentes, **caractérisée en ce que** le second canal en spirale (18) présente une section d'écoulement inférieure à celui du premier canal en spirale (16).

9. Turbine (10) selon l'une quelconque des revendications précédentes, **caractérisée en ce que** les canaux en spirale (16, 18) sont asymétriques l'un par rapport à l'autre, notamment en ce qui concerne leur section d'écoulement respective.
